# EUROPEAN PATENT APPLICATION

(11) **EP 1 814 205 A2**
(43) Date of publication of application: **01.08.2007**
(21) Application number: 07380016.1
(22) Date of filing: 26.01.2007
(51) Int. Cl.: H02H 3/08

(54) **A programmable electrical cut-out circuit breaker**

(30) Priority: 26.01.2006 ES 200600185 U
(71) Applicant: Perez Rodriquez, Arturo, 28220 Majadahonda (ES)
(72) Inventor: Perez Rodriquez, Arturo, 28220 Majadahonda (ES)

(57) **Abstract**

The object of the postulated invention is a cut out circuit breaker 3, i.e. a circuit breaker whose normal operating position, when its release system is not excited, is connected, usually by means of a spring.

The opening of the circuit is performed by a release coil 2, when excited by the cut out system, 1 Fig. 1, and 4- 5 in Figs. 2 and 3. The coil 7 is connected to the two terminals of the main contacts 3. The apparatus is completed by the addition of a programmer 6, the encoder, 9, and the resetting device 10.

The advantage of the proposed special cut out circuit breaker is the fact that it allows the administrator of an electrical distribution network (dispatching) to control the maximum power each and all the users can get from the mains, in order to protect effectively the transformers, feeding lines and switchgear, **without leaving the whole sector of the users out of service**, allowing each individually affected user to reset the supply service from his home remotely by means of a simple operation.

One very important feature of the proposed system is that it does not require installing new auxiliary control lines, but utilizes the main lines to perform its operations.

The level of control obtained depends on the embodiment installed:
1. - Control obtained with autonomous programmers integrated in the cut out circuit breaker: Fig. 1 and 2.
2. - Control obtained with programmers remotely governed from the dispatching: Fig. 3

The postulant does not know any patent application covering the object of the postulated patent, nor any installation made accordingly to it.

## Description

The object of this innovation is an electrical device able to control the maximum electrical intensity that each user of a distribution network can get from the mains, accordingly to the variation of a given parameter.

Such a device, that is able to cut the electrical supply to one user, when the electrical intensity (Amperage) he is receiving through his feeding line, arrives to a certain value, in our case programmable and/or remotely controlled, is the only real protection of the transformer itself and of the feeding lines and switchgear of the installation, against overloads which can destroy or damage them, most often by setting them afire. That is so, because in a distribution system it is not acceptable to switch out the transformer, by its automatic protection relays, when the intensity it is giving to the network is over its rated intensity, resulting in a blackout of the whole sector involved mainly when this belongs to a public distribution system. What is needed is to reduce the load the network users are asking for. Or to oversize the transformer, what is not economically acceptable.

### BACKGROUND OF THE INVENTION

The postulant does not know any electrical device designed to perform as a programmable control of the intensity of the electrical load the users of a distribution network can take from the mains.

### SUMMARY OF THE INVENTION

The essence of the present innovation is to provide a cut-out electrical circuit breaker with a programming device that changes the level of the cut-out intensity of the release system along the hours of the day, or the day of the week, or as a function of a factor depending on the passage of time or of any other variable factor, accordingly to a certain programme.

The overload release systems are usually of the bimetallic strip type 1, which bends under the effects of the electrical load and energizes the release coil, 2, after a certain amount of time has been elapsed, since the overload started.

In the case of the proposed release system, a special programmer, 6, modifies the geometrical characteristics of the bimetallic release system, accordingly to a pre- established programme.

In other cases, the release coil is fed by the voltage drop of a resistor 4, voltage which is converted electronically 5, into an electrical signal which energizes the release coil, 2.

The specific feature of the cut-out circuit breakers suitable for this intensity controlled system is described a little ahead.

### DESCRIPTION OF THE DRAWINGS

The drawings do not show in detail how the release and programming devices are made, because they are not claimed, but how they are functionally integrated into the cut-out circuit breaker, and the peculiar way this later is constructed.

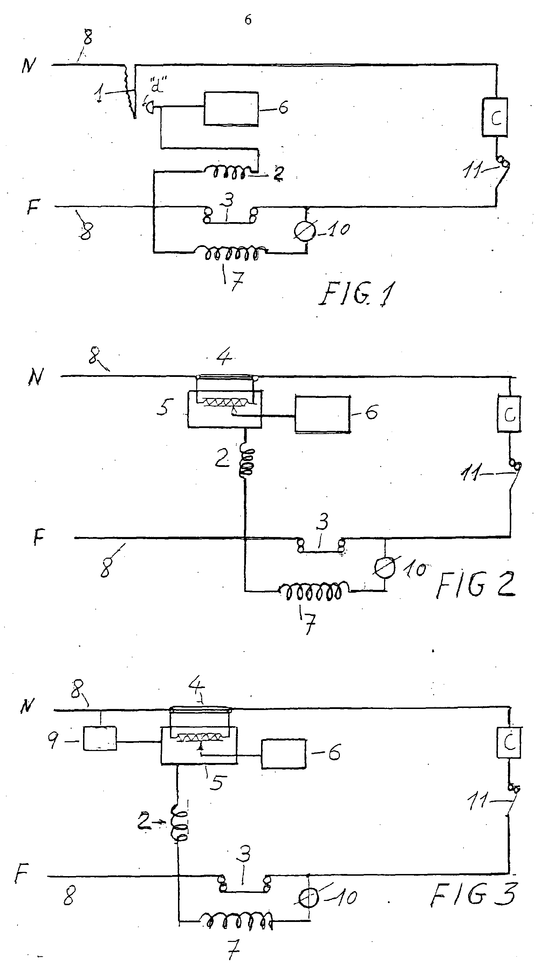

Drawing Fig. 1 shows a bimetallic strip release system 1 that closes the feeding circuit of the release coil, 2, of the main contacts, 3 of the cut-out circuit breaker.

Drawing Fig. 2 shows an electronic release system 4, 5, wherein the electrical load passing through an electrical resistor, 4, originates a voltage drop which, by means of an electronic circuit, 5, feeds the release coil 2, which opens the main contact or contacts, 3. Therefore, the coil 7 is energized and keeps the main contacts 3 open.

Drawing Fig.3 shows a programmable cut-out circuit breaker where the release system is governed remotely through the main line, 8, and the modulator or encoder, 9.

### DESCRIPTION OF ONE EMBODYMENT

In the schematic representation of Fig. 3, the circuit breaker is of the type "normally connected", i.e. when the overload release coil 2 is not excited, the contacts 3 are closed, most often by a spring. The two terminals of the coil 7, which keeps the main contacts 3 open after they have been open by the excitation of coil 2, are connected, one to the in terminal, and the other to the out terminal of the main contacts 3. The overload release system, 4 and 5, is remotely governed from the dispatching of the transformer room by means of the main line 8 and the modulator or encoder, 9.

The release system can be of the conventional bimetallic strip type, where the gap "d" on Fig. 1, is modified by a programming device, 6, mechanical, electro-mechanical or electronic, accordingly to one pre established daily, weekly, monthly, etc. basis.

The release system can also be of the electronic type as shown in Figs. 2 and 3.In this case, the electrical current flows through a resistor 4, producing a voltage drop that is proportional to the intensity of the current. This voltage drop enters the electronic device 5 that sends the release current to the coil 2, only when the voltage drop reaches the convenient pre established level. A programming system, 6, modifies this level accordingly to the requirements of the load graph characteristic of the distribution system.

In a more developed stage of the innovation Fig 3, the programmable release system, 5-6, is remotely controlled from the dispatching room by a signal transmitted through the feeding lines 8 and the encoder, 9.

The system works this way:

When the load of the transformer reaches during a certain time its maximum acceptable value, a conventional emitting device sends an electronic signal through the mains 8, to each and all of the users, signal that reduces the release intensity of each and all cut-out circuit breakers, in the required percentage to keep the load of the concerned transformer within its safe limits.

The user, who was asking the network for more than this percentage of his allowed rated maximum intensity, will be cut out from the mains, after a time.

To reset the supply service, the concerned user only needs to switch off several electrical appliances, and then open the main circuit breaker 11, which is at his home, what will leave without current the maintenance coil 7, and as a consequence the main contacts, 3 will be closed again, and the electrical service, re- established.

On the contrary, the users whose demanded intensity was under this percentage will continue being fed as usually.

The circuit of the maintenance coil, 7, can be provided with a resetting device 10 that will open its circuit several times in the day. That is very useful in case the user is absent from his home and the system has cut out his electrical supply because of an overload, not to let the refrigerators out of work for a long time.

The setting of the percentage is made on the basis of the load graphs of the sector involved:

During the peak zones the reduction percentage could be 60%- 80%, whilst during the valley hours, could be as high as 100, 10 to 100, 20%

## Claims

1. A programmable electrical cut- out circuit breaker comprising a mechanical, electromechanical or electronic programming device which modifies the setting of the release system.

2. A programmable electrical cut- out circuit breaker, as claimed on claim 1, further including en encoder or modulating system electrically connected to the main line and to the programmable release system.

3. A programmable electrical cut- out circuit breaker as claimed on claim 1, wherein the maintenance coil in the open position of the circuit breaker, has one ending connected to the in terminal of the main contacts of the circuit breaker and the other to the out terminal.

4. A programmable electrical cut- out circuit breaker as claimed on claim 1, further including one resistor in the main line, whose two terminals are connected to the programmable release system.

5. A programmable electrical cut- out circuit breaker as claimed on claim 1, further including an automatic reset device.
